# EUROPEAN PATENT APPLICATION

(11) **EP 3 742 263 A1**
(43) Date of publication of application: **25.11.2020**
(21) Application number: 20185022.9
(22) Date of filing: 02.05.2013
(51) Int. Cl.: G06F 3/01, G06F 3/0488, G06F 15/02, G06F 3/038, G06F 3/0481, G06F 3/0483, G06F 3/0485, H04M 1/725, H04N 5/232, G03B 17/00

(54) **TERMINAL AND METHOD FOR CONTROLLING THE SAME BASED ON SPATIAL INTERACTION**

(30) Priority: 04.05.2012 KR 20120047678; 21.11.2012 KR 20120132222; 21.11.2012 KR 20120132223; 30.11.2012 KR 20120137740
(62) Divisional of application: 13166321.3
(71) Applicant: Samsung Electronics Co., Ltd., Gyeonggi-do 16677 (KR)
(72) Inventor: JEON, Jinyoung, 16677 Suwon-si (KR); KANG, Jiyoung, 16677 Suwon-si (KR); LEE, Boyoung, 16677 Suwon-si (KR); KIM, Daesung, 16677 Suwon-si (KR); KIM, Jinyong, 16677 Suwon-si (KR)
(74) Representative: Nederlandsch Octrooibureau

(57) **Abstract**

A method for controlling an electronic device, the method comprising: acquiring an input image using a camera; and analyzing a user gesture in the input image, by identifying a user's hand disposed in a predefined configuration, and determining a shape of the hand is changed to a predetermined shape by a movement of the at least part of the hand, and executing a camera function corresponding to the user gesture. An electronic device implementing the method.

## Description

### BACKGROUND OF THE INVENTION

### 1. Field of the Invention:

The present invention relates to a terminal and method for controlling same based on spatial interaction. More particularly, the present invention relates to a terminal and method for recognizing distinct spatial gestures and executing the input corresponding to a recognized spatial gesture interactively.

### 2. Description of the Related Art:

With the widespread use of smart electronic devices, research and development has focused on various interaction technologies for facilitating user's device control.

According to the related art, some representative interaction-based device control technologies include touch or motion-based device control and hand gesture-based device control technologies.

Therefore, a need exists for a terminal and method for recognizing distinct spatial gestures and executing the input corresponding to a recognized spatial gesture interactively.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention provides a terminal and method for controlling the same in such a way of recognizing distinct spatial gestures and executing the input corresponding to a recognized spatial gesture interactively.

In accordance with an aspect of the present invention, a method for controlling a terminal is provided. The method includes detecting a spatial gesture, analyzing the spatial gesture, and executing an action depending on the analysis result.

In accordance with another aspect of the present invention, a method for controlling a terminal is provided. The method includes detecting a user gesture moving an object in a certain direction within proximity of the terminal, determining at least one of the movement direction, movement speed, and movement distance of the user gesture, and performing a control operation associated with a currently running application according to the determined at least one of movement direction, movement speed, and movement distance of the user gesture.

In accordance with another aspect of the present invention, a terminal is provided. The terminal includes a sensing unit which detects a user gesture moving an object in a certain direction within proximity of the terminal, a control unit which determines at least one of the movement direction, movement speed, and movement distance of the user gesture and performs a control operation associated with a currently running application according to the determined at least one of movement direction, movement speed, and movement distance of the user gesture, and a display unit which displays an execution screen of the application under the control of the control unit.

In accordance with another aspect of the present invention, a method for controlling a terminal inside a vehicle is provided. The method includes initiating a driving mode based on at least one of a movement state of the terminal and a movement state of the vehicle, detecting a user gesture within proximity of the terminal when the terminal is in the driving mode, and executing a function associated with the corresponding user gesture when the terminal is in the driving mode.

In accordance with another aspect of the present invention, a terminal is provided. The terminal includes a sensing unit which detects a user gesture moving in a certain direction within proximity of the terminal, a control unit which initiates a driving mode based on at least one of a movement state of the terminal and a movement state of the vehicle and which executes, when the user gesture is detected by the sensing unit when the terminal is in the driving mode, a function associated with the corresponding user gesture when the terminal is the driving mode, and an output unit which outputs a function execution result under the control of the control unit.

In accordance with another aspect of the present invention, a method for controlling a terminal is provided. The method includes entering a specific operation mode according to a state of the terminal, detecting a user gesture within proximity of the terminal when the terminal is in the specific operation mode, and displaying information associated with the operation mode in response to the user gesture.

In accordance with another aspect of the present invention, a terminal is provided. The terminal includes a sensing unit which detects a user gesture within proximity of the terminal, a display unit which displays information, and a control unit which controls entering a specific operation mode according to a condition of the terminal and displaying, when the user gesture by the sensing unit when the terminal is in the specific operation mode, the information associated with the operation mode in response to the user gesture.

In accordance with another aspect of the present invention, a method for controlling a terminal is provided. The method includes detecting a user gesture within proximity of the terminal, determining a type of the user gesture, and performing a control operation of the terminal according to the user gesture.

In accordance with another aspect of the present invention, a terminal is provided. The terminal includes a sensing unit which detects a user gesture within proximity of the terminal, a control unit which determines a type of the user gesture and performs a control operation of the terminal according to the user gesture, and a display unit which displays a result of the control operation of the control unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a flowchart illustrating a method for controlling a terminal based on spatial gestures according to an exemplary embodiment of the present invention;
FIGS. 2 to 25 are diagrams illustrating spatial gestures defined for use in a spatial interaction-based terminal control method according to an exemplary embodiment of the present invention;
FIG. 26 is a diagram illustrating an exemplary spatial interaction set for use in a spatial interaction-based terminal control method according to an exemplary embodiment of the present invention;
FIG. 27 is a diagram illustrating exemplary screen displays presented in association with a spatial interaction-based terminal control method according to an exemplary embodiment of the present invention;
FIG. 28 is a diagram illustrating an exemplary situation of making a spatial gesture available in a spatial interaction-based terminal control method according to an exemplary embodiment of the present invention;
FIG. 29 is a diagram illustrating an exemplary situation of making a spatial gesture available in a spatial interaction-based terminal control method according to an exemplary embodiment of the present invention;
FIG. 30 is a diagram illustrating an exemplary situation of making a spatial gesture available in a spatial interaction-based terminal control method according to an exemplary embodiment of the present invention;
FIG. 31 is a diagram illustrating an exemplary situation of making a spatial gesture available in a spatial interaction-based terminal control method according to an exemplary embodiment of the present invention;
FIG. 32 is a diagram illustrating an exemplary situation of making a spatial gesture available in a spatial interaction-based terminal control method according to an exemplary embodiment of the present invention;
FIG. 33 is a diagram illustrating an exemplary situation of making a spatial gesture available in a spatial interaction-based terminal control method according to an exemplary embodiment of the present invention;
FIG. 34 is a diagram illustrating an exemplary situation of making a spatial gesture available in a spatial interaction-based terminal control method according to exemplary embodiment of the present invention;
FIG. 35 is a diagram illustrating an exemplary situation of making a spatial gesture available in a spatial interaction-based terminal control method according to an exemplary embodiment of the present invention; and
FIG. 36 is a block diagram illustrating a configuration of a terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present invention is applicable to all the types of devices capable of recognizing spatial gestures as well as the electronic terminals including a smartphone, a portable terminal, a mobile terminal, a Personal Digital Assistant (PDA), a Portable Multimedia Player (PMP), a laptop computer, a tablet computer, a Personal Computer, WiBro terminal, a digital camera, a portable game console, an MP3 player, a handheld e-book, a Global Positioning System (GPS) navigation, a high Definition Television (HDTV), and the like.

The terminology used herein is for the purpose of describing particular exemplary embodiments only and is not intended to be limiting of the present invention. Unless otherwise defined, all terms used herein have the same meaning as commonly understood by one of ordinary skill in the art to which the present invention pertains, and should not be interpreted as having an excessively comprehensive meaning nor as having an excessively contracted meaning. If technical terms used herein is erroneous that fails to accurately express the technical idea of the present invention, such technical terms should be replaced with technical terms that allow the person in the art to properly understand. The general terms used herein should be interpreted according to the definitions in the dictionary or in the context and should not be interpreted as an excessively contracted meaning.

As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, steps, operations, elements, components, and/or groups thereof.

Exemplary embodiments of the present invention are described hereinafter with reference to the accompanying drawings in detail.

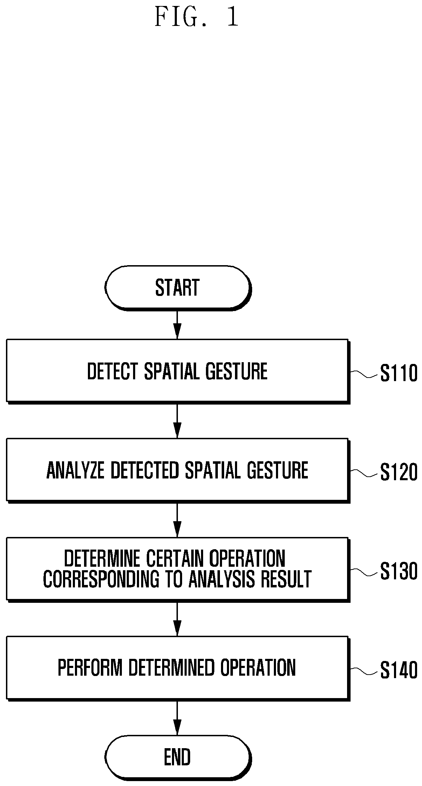

FIG. 1 is a flowchart illustrating a method for controlling a terminal based on spatial gestures according to an exemplary embodiment of the present invention.

Referring to FIG. 1, the terminal control method according to an exemplary embodiment of the present invention comprises the following steps.

At step S110, the terminal detects a spatial gesture. As an example, the spatial gesture can be made with an input means such as user's hand (including fingers) or the like.

According to exemplary embodiments of the present invention, the terminal is capable of detecting the spatial gesture by means of (e.g., using) a camera,a proximity sensor, and/or the like. The terminal is also capable of detecting multiple spatial gestures simultaneously or sequentially.

According to exemplary embodiments of the present invention,the terminal may be capable of detecting a touch gesture along with the spatial gesture. As an example, the terminal may be capable of detecting the spatial gesture and the touch gesture simultaneously or sequentially. As another example, terminal may be capable of detecting the spatial gesture in a state in which the touch gesture is maintained.

Thereafter, the terminal analyzes the detected spatial gesture at step S120.

According to exemplary embodiments of the present invention, the terminal may be capable of detecting the spatial gesture by analyzing the picture taken by the camera and/or by means of (e.g., using) the proximity sensor. The terminal is capable of analyzing a motion oriented to at least one direction or drawing a certain shape (which may be referred to as sweep), a motion speed, a motion length, an input means' shape (e.g., hand or finger shape), at least one coordinates associated with the input means' approach, an approaching speed, an approaching distance, and the like.

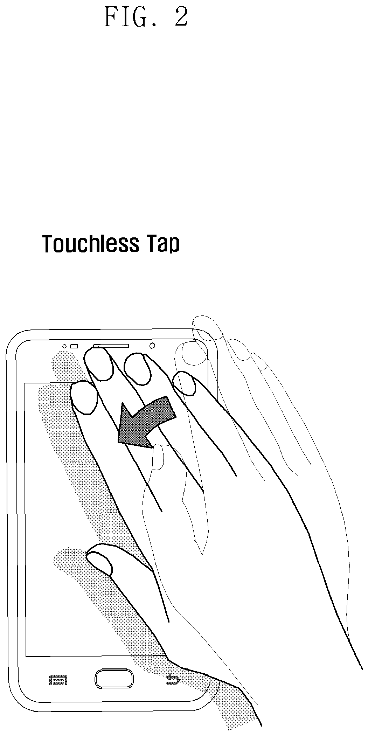

If the user's hand corresponds to the input means, the user is capable of making spatial gestures recognizable by the terminal. For example, spatial gestures may include a tap (e.g., bending forward and then stretching the hand), a sweep (e.g., sweeping hand up/down/left/right), a wave (e.g., a horizontal wave and/or a vertical wave), a circle (e.g., a drawn circle in a clockwise or a counter-clockwise direction), a grasp (e.g., a clench of a palm to form a fist), a pinch (e.g., a squeeze between a thumb and an index finger), an approach, a trace (e.g., tracking a hand motion in real time), a cover (e.g., covering the terminal with a hand), a push (e.g., a push of a hand to the terminal), a two hand push, a two hand open, a two hand circle, put two hand, a touch and sweep, an approach, and the like. The aforementioned gestures are depicted in FIGS. 2 to 25 respectively.

FIGS. 2 to 25 are diagrams illustrating spatial gestures defined for use in a spatial interaction-based terminal control method according to an exemplary embodiment of the present invention.

Referring to FIG. 2, the spatial gesture may be a touchless tap. For example, the touchless tap may correspond to a user moving a hand closer to the screen. The touchless tap may correspond to the user moving the hand closer to a specific desired portion of the screen. According to exemplary embodiments of the present invention, the terminal may detect the touchless tap by determining that the user's hand is moved closer to the screen. For example, the terminal may compare coordinates of a detected user's hand and determine that a change in the coordinates of the detected user's hand corresponds to the touchless tap.

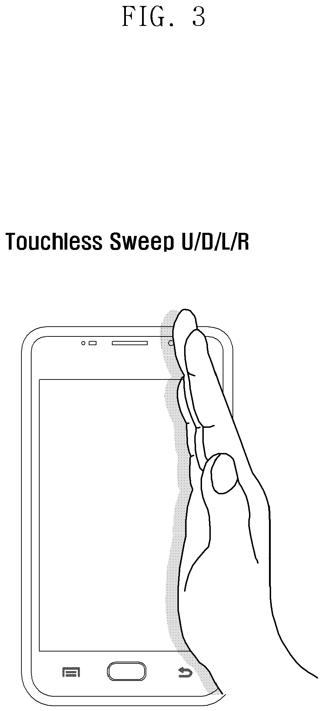

Referring to FIG. 3, the spatial gesture may be a touchless sweep. The touchless sweep may be a sweep motion in at least one of the up, down, left, and right directions. For example, the touchless sweep may correspond to a user's hand being disposed such that a surface of the palm of the user's hand is substantially perpendicular to the screen surface and moved in at least one of the up, down, left, and right directions. According to exemplary embodiments of the present invention, the terminal may detect the touchless sweep by determining that the user's hand is disposed in a predefined configuration (e.g., such that the surface of the palm is substantially perpendicular to the screen surface) and determining that the user's hand is moved relative to (e.g., across) the screen. For example, the terminal may compare coordinates of a detected user's hand and determine that a change in the coordinates of the detected user's hand corresponds to the touchless sweep.

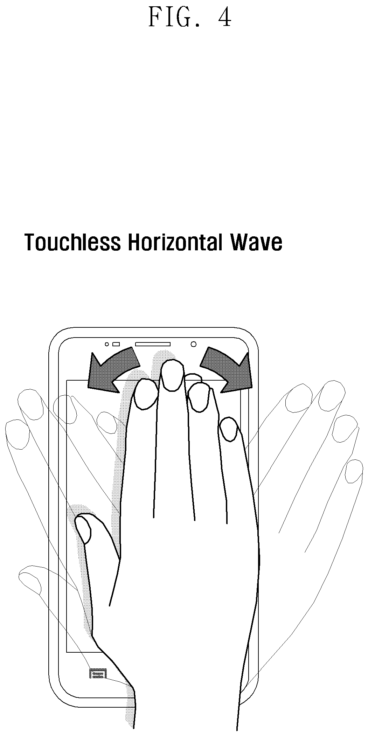

Referring to FIG. 4, the spatial gesture may be a touchless horizontal wave. The touchless horizontal wave may be a motion of the user's hand so as to variously move across the screen from one side of the terminal to an opposite side of the terminal. For example, the motion of the user's hand may be moved from a left side of the terminal screen to the right side of the screen. The motion of the user's hand may be repeated in the touchless horizontal wave. As an example, the horizontal wave may include the user's hand being outstretched such that the user's palm is facing (e.g., substantially parallel to) the screen. to exemplary embodiments of the present invention, the terminal may detect the touchless horizontal wave by determining that the user's hand is disposed in a predefined configuration (e.g., such that the surface of the palm is substantially parallel to the screen surface) and determining that the user's hand is moved relative to (e.g., from the left side to the right side, from the right side to the left side, or the like) the screen. For example, the terminal may compare coordinates of a detected user's hand and determine that a change in the coordinates of the detected user's hand corresponds to the touchless horizontal wave.

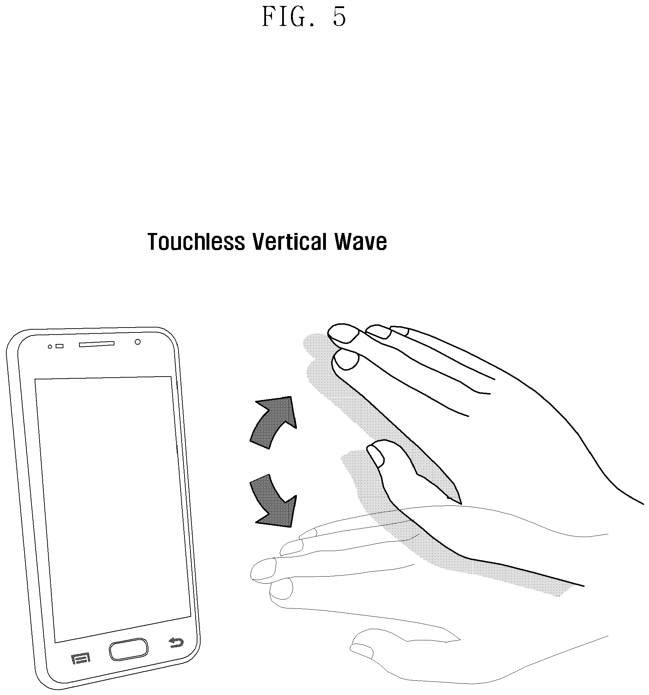

Referring to FIG. 5, the spatial gesture may be touchless vertical wave. The touchless vertical wave may be a motion of the user's hand so as to variously move across the screen from one side of the terminal to an opposite side of the terminal. For example, the motion of the user's hand may be moved from a top side of the terminal screen to the bottom side of the screen. The motion of the user's hand may be repeated in the touchless vertical wave. As an example, the vertical wave may include the user's hand being outstretched such that the user's palm is facing (e.g., substantially parallel to) the screen when the hand is between the motion to the top side of the terminal and the motion to the bottom side of the terminal. According to exemplary embodiments of the present invention, the terminal may detect the touchless vertical wave by determining that the user's hand is disposed in a predefined configuration (e.g., such that the surface of the palm is substantially parallel to the screen surface) and determining that the user's hand (e.g., the user's outstretched fingers) is moved relative to (e.g., from the top side to the bottom side, from the bottom side to the top side, or the like) the screen. For example, the terminal may compare coordinates of a detected user's hand (e.g., the user's outstretched fingers) and determine that a change in the coordinates of the detected user's hand corresponds to the touchless vertical wave.

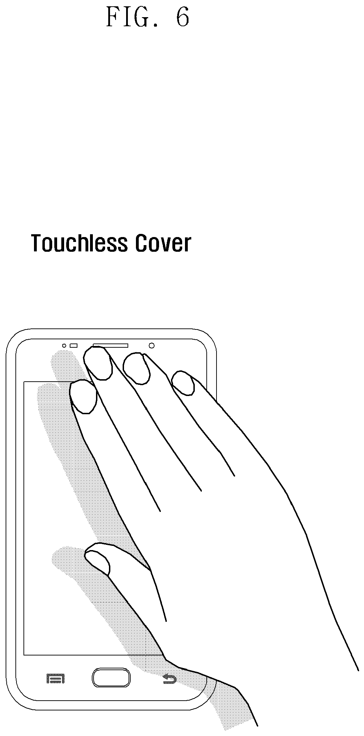

Referring to FIG. 6, the spatial gesture may be a touchless cover. For example, the touchless cover may correspond to the user's hand being moved so as to cover the screen. The touchless cover may include the user's hand having the palm facing the screen so as to be substantially parallel to the screen and substantially covering the screen. The user's fingers may be outstretched during the touchless cover. According to exemplary embodiments of the present invention, the terminal may detect the touchless cover by determining that the user's hand is disposed in a predefined configuration (e.g., such that the surface of the palm is substantially parallel to the screen surface) and determining that the user's hand is moved relative to the screen (e.g., so as to cover substantially the entire screen). For example, the terminal may compare coordinates of a detected user's hand and determine that a change in the coordinates of the detected user's hand corresponds to the touchless cover. For example, the touchless cover may include the user moving the hand closer to the screen and so as to cover substantially the entire screen. As another example, the touchless cover may include the user moving the hand substantially along an original plane so as to cover substantially the entire screen.

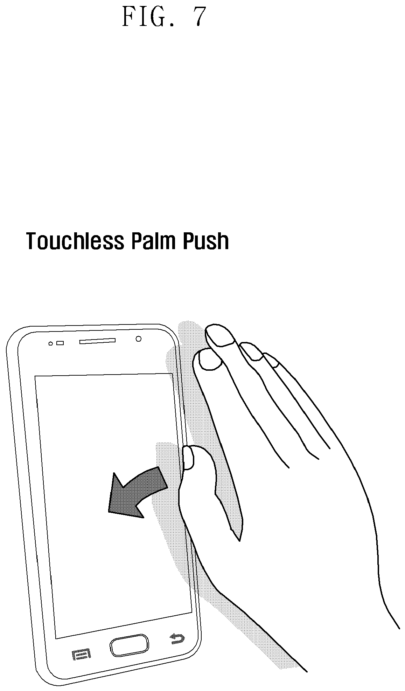

Referring to FIG. 7, the spatial gesture may be a touchless palm push. For example, the touchless palm push may include the user's hand being moved closer to the screen. The touchless palm push may include the user's fingers being outstretched and the palm facing the screen (e.g., such that the surface of the palm is substantially parallel to the screen).According to exemplary embodiments of the present invention, the terminal may detect the touchless palm push by determining that the user's hand is disposed in a predefined configuration (e.g., such that the surface of the palm is substantially parallel to the screen surface) and determining that the user's hand is moved relative to the screen (e.g., such that the user's palm is moved closer to the screen). For example, the terminal may compare coordinates of a detected user's hand and determine that a change in the coordinates of the detected user's hand (e.g., the user's palm) corresponds to the touchless palm push.

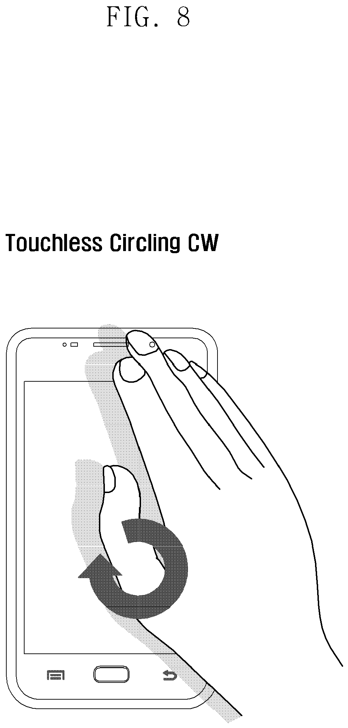

Referring to FIG. 8, the spatial gesture may be a touchless circling in a clockwise direction. The touchless circling may include moving a portion of the user's hand in a clockwise direction. For example, the touchless circling may include moving the palm in a clockwise direction relative to the screen. As another example, the touchless circling may include moving at least one finger in a clockwise direction relative to the screen. According to exemplary embodiments of the present invention, the terminal may detect the touchless circling by determining that the user's hand is disposed in a predefined configuration (e.g., such that the surface of the palm is substantially parallel to the screen surface) and determining that the user's hand is moved relative to the screen (e.g., such that at least a portion of the user's hand is moved in a clockwise direction). For example, the terminal may compare coordinates of a detected user's hand (e.g., the palm, at least one finger, and/or the like) and determine that a change in the coordinates of the detected user's hand (e.g., the palm, at least one finger, and/or the like) corresponds to the touchless circling in a clockwise direction.

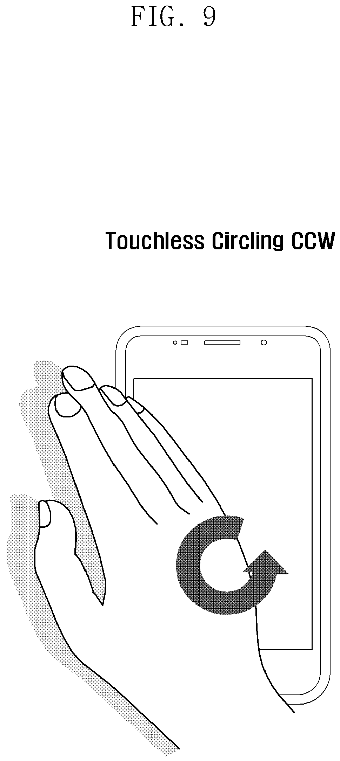

Referring to FIG. 9, the spatial gesture may be a touchless circling in a counter-clockwise direction. The touchless circling may include moving a portion of the user's hand in a counter-clockwise direction. For example, the touchless circling may include moving the palm in a counter-clockwise direction relative to the screen. As another example, the touchless circling may include moving at least one finger in a counter-clockwise direction relative to the screen. According to exemplary embodiments of the present invention, the terminal may detect the touchless circling by determining that the user's hand is disposed in a predefined configuration (e.g., such that the surface of the palm is substantially parallel to the screen surface) and determining that the user's hand is moved relative to the screen (e.g., such that at least a portion of the user's hand is moved in a counter-clockwise direction). For example, the terminal may compare coordinates of a detected user's hand (e.g., the palm, at least one finger, and/or the like) and determine that a change in the coordinates of the detected user's hand (e.g., the palm, at least one finger, and/or the like) corresponds to the touchless circling in a counter-clockwise direction.

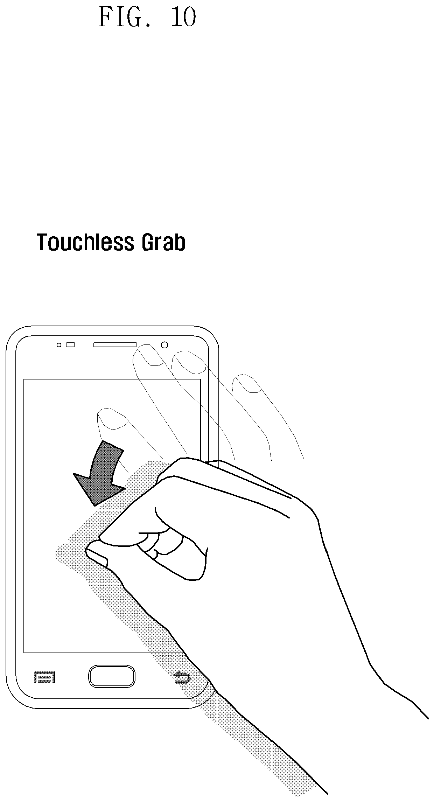

Referring to FIG. 10, the spatial gesture may be a touchless grab. The touchless grab may include moving a user's hand such that the user's fingers are moved from a substantially outstretched position to a position in which the fingers are brought closer to the user's thumb, or such that the fingers are brought towards a clenched fist. According to exemplary embodiments of the present invention, the terminal may detect the touchless grab by determining that the user's hand is disposed in a predefined configuration (e.g., such that the user's fingers are substantially outstretched relative to the user's palm and/or thumb) and determining that the user's hand is moved relative to the screen (e.g., such that the user's fingers are brought towards at least one of the user's thumb and palm so as to form or begin to form, for example, a clenched fist). For example, the terminal may compare coordinates of a detected user's hand (e.g., the palm, at least one finger, and/or the like) and determine that a change in the coordinates of the detected user's hand (e.g., the palm, at least one finger, and/or the like) corresponds to the touchless grab.

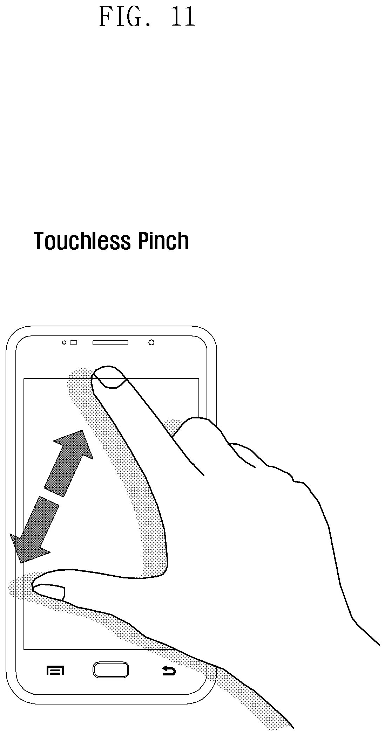

Referring to FIG. 11, the spatial gesture may be a touchless pinch. The touchless pinch may include moving a user's hand from a position in which at least one finger is outstretched to a position in which at least one outstretched finger is substantially touching the thumb. For example, the touchless pinch may include moving an outstretched finger and outstretched thumb towards each other. According to exemplary embodiments of the present invention, the terminal may detect the touchless pinch by determining that the user's hand is disposed in a predefined configuration (e.g., such that at least one of the user's fingers is substantially outstretched relative to the user's palm and/or thumb) and determining that the user's hand is moved relative to the screen (e.g., such that at least one outstretched finger is brought towards the user's thumb). For example, the terminal may compare coordinates of a detected user's hand (e.g., the palm, at least one finger, the thumb, and/or the like) and determine that a change in the coordinates of the detected user's hand (e.g., the palm, at least one finger, the thumb, and/or the like) corresponds to the touchless pinch.

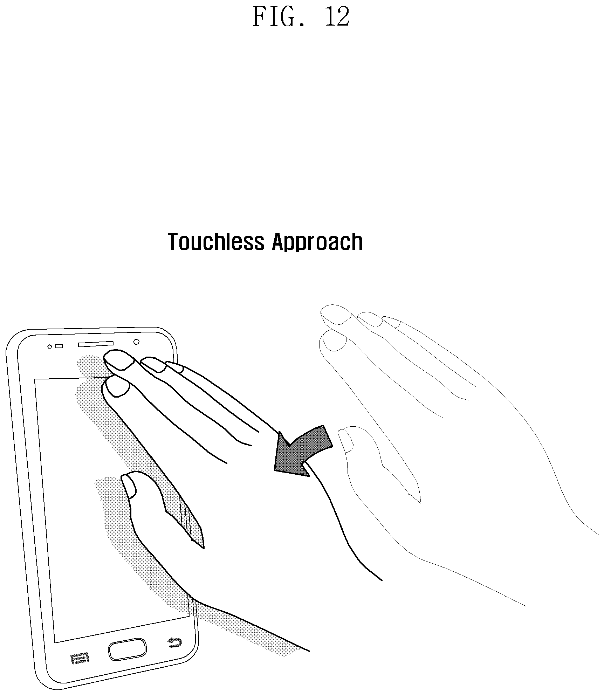

Referring to FIG. 12, the spatial gesture may be a touchless approach. For example, the touchless approach may include the user's hand being moved closer to the screen. The touchless approach may include the user's fingers being outstretched and the palm facing the screen (e.g., such that the surface of the palm is substantially parallel to the screen).According to exemplary embodiments of the present invention, the terminal may detect the touchless approach by determining that the user's hand is disposed in a predefined configuration (e.g., such that the surface of the palm is substantially parallel to the screen surface) and determining that the user's hand is moved relative to the screen (e.g., such that the user's hand is moved closer to the screen). For example, the terminal may compare coordinates of a detected user's hand and determine that a change in the coordinates of the detected user's hand (e.g., the user's palm) corresponds to a touchless approach. According to exemplary embodiments, the terminal may distinguish between a touchless palm push and a touchless approach based on the distance along an axis perpendicular to the screen which the hand moves in a direction closer to the screen. For example, the touchless approach may include the hand being initially disposed at a distance farther from the screen than for the touchless palm push.

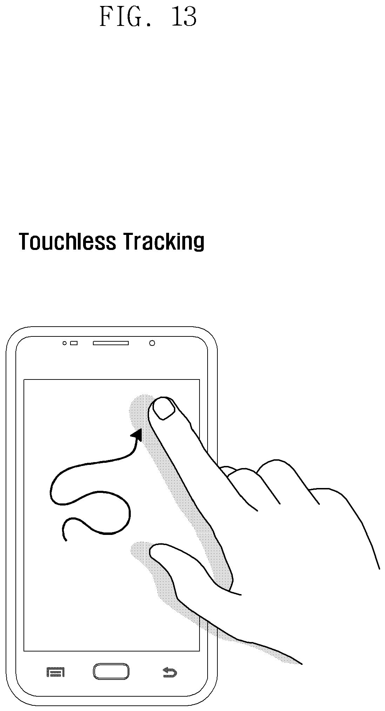

Referring to FIG. 13, the spatial gesture may be a touchless tracking. For example, the touchless tracking may include a user moving an outstretched finger across the screen. The touchless tracking may include the user moving the outstretched finger along a path across the screen. According to exemplary embodiments of the present invention, the terminal may detect the touchless tracking by determining that the user's hand is disposed in a predefined configuration (e.g., such that at least one of the user's fingers is substantially outstretched relative to the user's palm and/or thumb) and determining that the user's hand is moved relative to the screen (e.g., such that at least one outstretched finger is moved across the screen). For example, the terminal may compare coordinates of a detected user's hand (e.g., the outstretched finger) and determine that a change in the coordinates of the detected user's hand (e.g., the outstretched finger) corresponds to the touchless tracking. For example, for a touchless tracking gesture, the distance between the outstretched finger and the surface of the screen may remain substantially the same throughout the tracking.

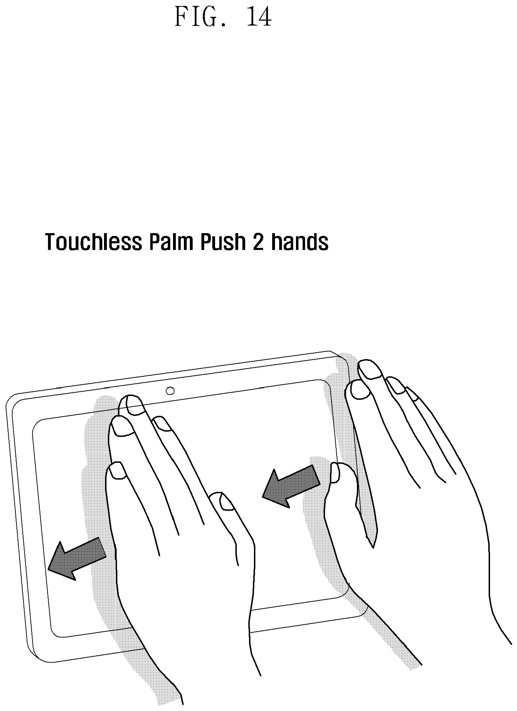

Referring to FIG. 14, the spatial gesture may be a touchless palm push of two hands. For example, the touchless palm push of two hands may include the two hands being moved closer to the screen. The touchless palm push of two hands may include the fingers on two hands being outstretched and the hands' respective palms facing the screen (e.g., such that the surface of the palm is substantially parallel to the screen).According to exemplary embodiments of the present invention, the terminal may detect the touchless palm push of two hands by determining that the two hands hand are respectively disposed in a predefined configuration (e.g., such that the surface of the palm is substantially parallel to the screen surface) and determining that both of the two hands are moved relative to the screen (e.g., such that the respective palms are moved closer to the screen). For example, the terminal may compare coordinates of a detected two hands and determine that a change in the coordinates of the detected two hands (e.g., the respective palms) corresponds to the touchless palm push of two hands.

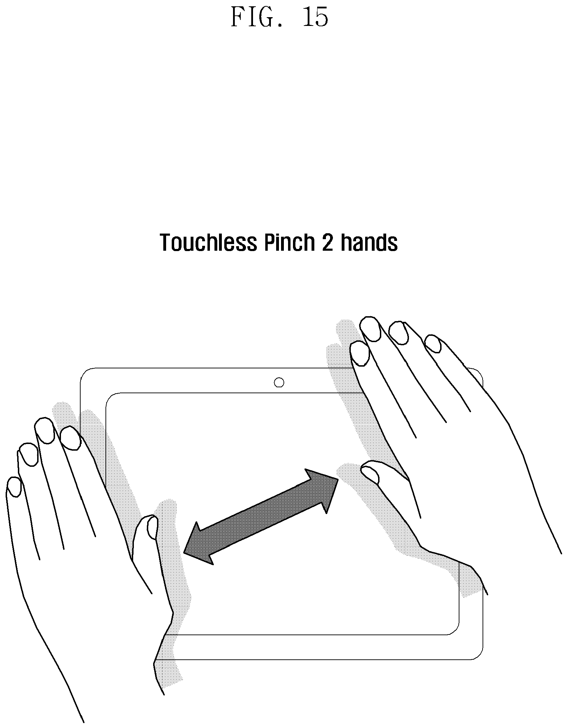

Referring to FIG. 15, the spatial gesture may be a touchless pinch of two hands. For example, the touchless pinch of two hands may include at least one of two hands being moved relative to the screen so as to move the two hands closer together. The touchless pinch of two hands may include at least one finger or thumb on each of the two hands being outstretched and the outstretched at least one finger or thumb of each of the two hands being moved closer together. The touchless pinch of two hands may include the outstretched at least one finger or thumb of each of the two hands being moved so as to be in touching relation. According to exemplary embodiments of the present invention, the terminal may detect the touchless pinch of two hands by determining that the two hands hand are respectively disposed in a predefined configuration (e.g., such that each of the two hands has at least one finger or thumb outstretched) and determining that at least one of the two hands is moved relative to the screen towards the other hand (e.g., such that the outstretched at least one finger or thumb on each hand is moved towards each other, and particularly, such that the outstretched at least one finger or thumb on each hand is moved so as to be in touching relation). For example, the terminal may compare coordinates of a detected two hands and determine that a change in the coordinates of the detected at least one of the two hands (e.g., the at least one outstretched finger or thumb) corresponds to the touchless pinch of two hands.

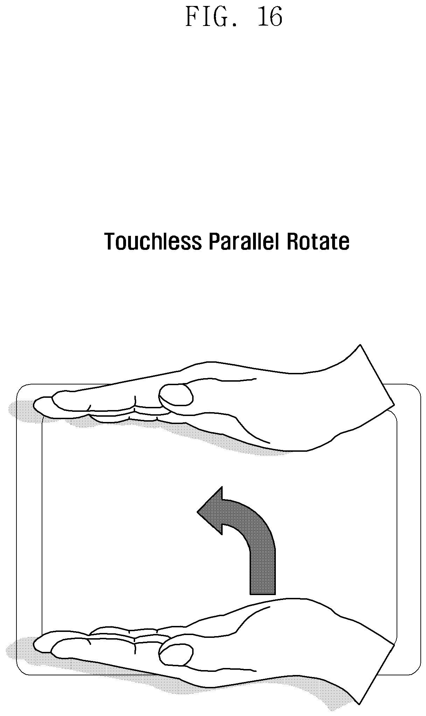

Referring to FIG. 16, the spatial gesture may be a touchless parallel rotate. The touchless parallel rotate may include two hands disposed at a distance from one another and moved around an axis that is perpendicular to the screen. For example, the touchless parallel rotate may correspond to two hands being disposed such that a surface of the palm of the two hands is substantially perpendicular to the screen surface and disposed such that the palm of each hand is parallel to the other, and the hands moved around an axis that is perpendicular to the screen. According to exemplary embodiments of the present invention, the terminal may detect the touchless parallel rotate by determining that each of the two hands is disposed in a predefined configuration (e.g., such that the surface of the palm is substantially perpendicular to the screen surface), determining that the palms of each of the two hands is substantially parallel with the other, and determining that the two hands are moved relative to the screen(e.g., around an axis that is perpendicular to (and extends from) the screen). For example, the terminal may compare coordinates of a detected two hands and determine that a change in the coordinates of the detected two hands corresponds to the touchless parallel rotate.

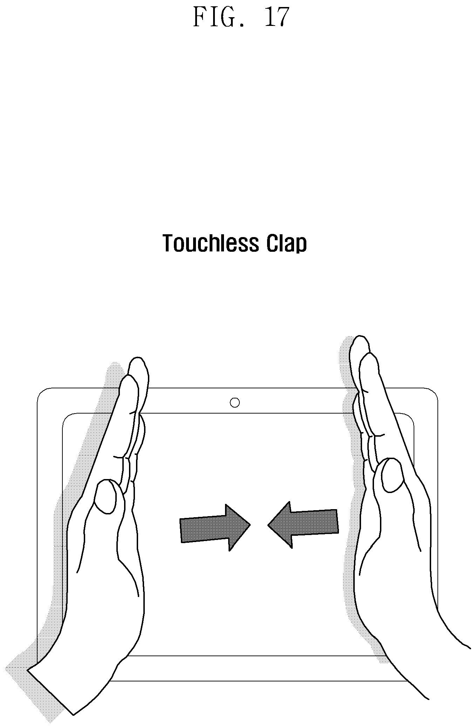

Referring to FIG. 17, the spatial gesture may be a touchless clap. The touchless clap may include two hands disposed at a distance from one another (e.g., such that the hands' respective palms are facing each other) and moved towards each other (e.g., along an axis that is substantially parallel to the screen). For example, the touchless clap may correspond to the two hands being disposed such that a surface of the respective palms of the two hands is substantially perpendicular to the screen surface and disposed such that the palm of each hand is parallel to the other (e.g., the palms are opposing or facing each other), and the hands are moved along an axis that is substantially parallel to the screen. According to exemplary embodiments of the present invention, the terminal may detect the touchless clap by determining that each of the two hands is disposed in a predefined configuration (e.g., such that the surface of the palm is substantially perpendicular to the screen surface), determining that the palms of each of the two hands opposes or faces the other, and determining that the two hands are moved relative to the screen (e.g., around an axis that is substantially parallel to the screen). For example, the terminal may compare coordinates of a detected two hands and determine that a change in the relative coordinates of the detected two hands corresponds to the touchless clap.

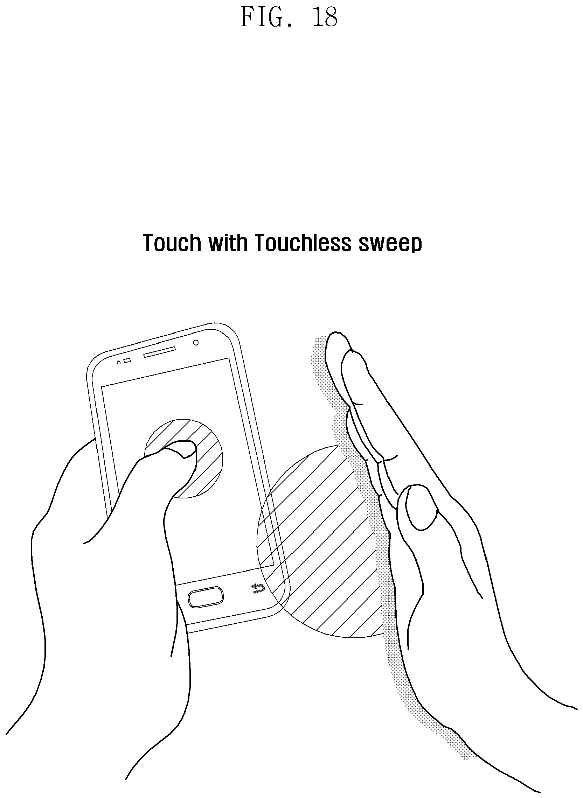

Referring to FIG. 18, the spatial gesture may be a touch with (e.g., in conjunction with) a touchless sweep. The touch with the touchless sweep may include a user touching the screen with an input means (e.g., a stylus, a finger, a thumb, and/or the like) and a sweep motion in at least one of the up, down, left, and right directions. For example, the touch with the touchless sweep may correspond to a user touching the screen with an input means and a hand being disposed such that a surface of the palm of the hand is substantially perpendicular to the screen surface and moved in at least one of the up, down, left, and right directions. According to exemplary embodiments of the present invention, the terminal may detect a touch (e.g., by a change in capacitance in the screen), and detect the touchless sweep by determining that the hand is disposed in a predefined configuration (e.g., such that the surface of the palm is substantially perpendicular to the screen surface) and determining that the hand is moved relative to (e.g., across at least a portion of) the screen. For example, the terminal may compare coordinates of a detected hand and determine that a change in the coordinates of the detected hand in conjunction with a touch event corresponds to the touch with touchless sweep.

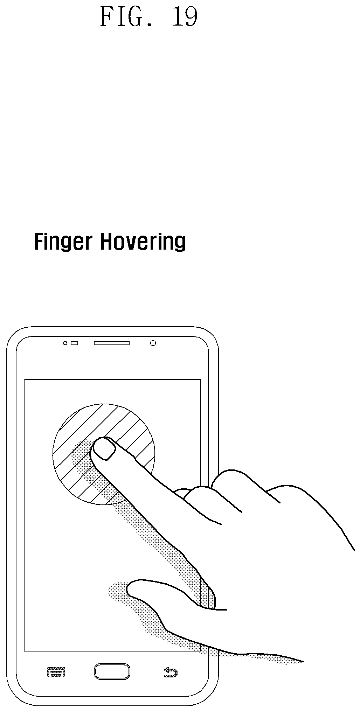

Referring to FIG. 19, the spatial gesture may be a finger hovering. For example, the finger hovering may correspond to a user holding a finger (or other input means) over substantially a same position relative to the screen for at least a predefined period of time. The finger hovering may include the finger being held in substantially a constant same position relative to the screen which is disposed away from the screen such that no contact is made between the input means disposed away from the screen and the screen surface. According to exemplary embodiments of the present invention, the terminal may detect the finger hovering by determining that the input means is held in substantially a constant position away from the screen for at least a predefined period of time. For example, the terminal may compare coordinates of a detected input means over a predefined period of time and determine that a lack of change in the coordinates of the detected input means corresponds to the finger hovering.

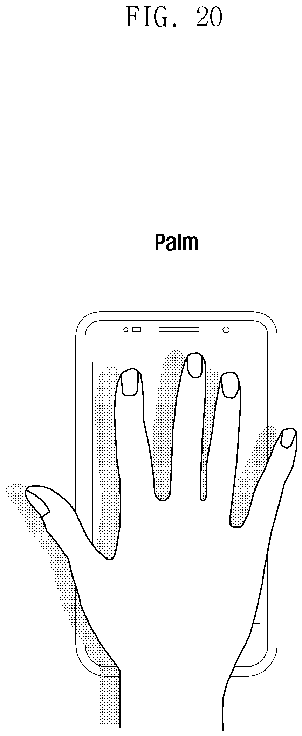

Referring to FIG. 20, the spatial gesture may be a palm. For example, the palm may correspond to a user holding an outstretched hand (e.g., having fingers outstretched) over substantially a same position relative to the screen for at least a predefined period of time. The palm may include the palm being held in substantially a constant same position relative to the screen which is disposed away from the screen such that no contact is made between the palm and the screen surface. According to exemplary embodiments of the present invention, the terminal may detect the palm by determining that the palm is held in substantially a constant position away from the screen for at least a predefined period of time. For example, the terminal may compare coordinates of a detected palm over a predefined period of time and determine that a lack of change in the coordinates of the detected palm corresponds to a palm. As another example, the terminal may compare the configuration of the hand over a predefined period of time and determine that maintaining the configuration of the hand in an outstretched configuration over the predefined of time corresponds to the palm.

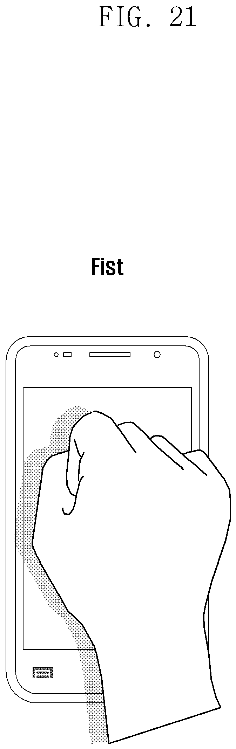

Referring to FIG. 21, the spatial gesture may be a fist. For example, the fist may correspond to a user holding a clenched hand (e.g., the fingers and thumb clenched in a fist) over substantially a same position relative to the screen for at least a predefined period of time. The fist may include the hand (e.g., the fist) being held in substantially a constant same position relative to the screen which is disposed away from the screen such that no contact is made between the fist and the screen surface. According to exemplary embodiments of the present invention, the terminal may detect the fist by determining that the hand is in a predetermined configuration (e.g., the hand forms a clenched fist), and determining that the fist is held in substantially a constant position away from the screen for at least a predefined period of time. For example, the terminal may compare coordinates of a detected fist over a predefined period of time and determine that a lack of change in the coordinates of the detected fist corresponds to a fist. As another example, the terminal may compare the configuration of the hand over a predefined period of time and determine that maintaining the configuration of the hand in a fist configuration over the predefined of time corresponds to the fist.

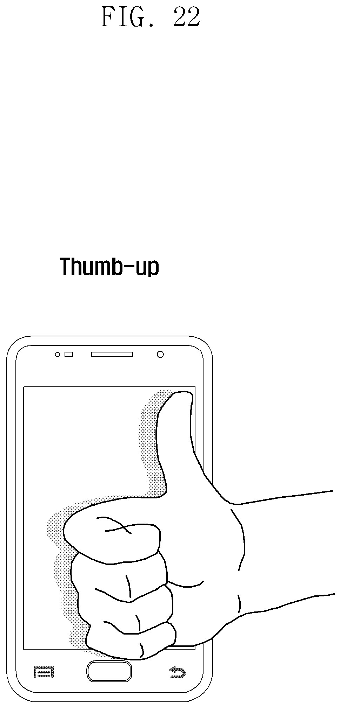

Referring to FIG. 22, the spatial gesture may be a thumb-up.For example, the thumb-up may correspond to a user holding a hand having an outstretched thumb and fingers clenched towards the palm over substantially a same position relative to the screen for at least a predefined period of time. The thumb-up may include the hand (e.g., the outstretched thumb) being held in substantially a constant same position relative to the screen which is disposed away from the screen such that no contact is made between the hand and the screen surface. According to exemplary embodiments of the present invention, the terminal may detect the thumb by determining that the hand is in a predetermined configuration (e.g., the hand forms a thumb-up sign), and determining that the thumb-up is held in substantially a constant position away from the screen for at least a predefined period of time. For example, the terminal may compare coordinates of a detected thumb-up over a predefined period of time and determine that a lack of change in the coordinates of the detected thumb-up corresponds to the thumb-up. As another example, the terminal may compare the configuration of the hand over a predefined period of time and determine that maintaining the configuration of the hand in the thumb-up configuration over the predefined of time corresponds to the thumb-up.

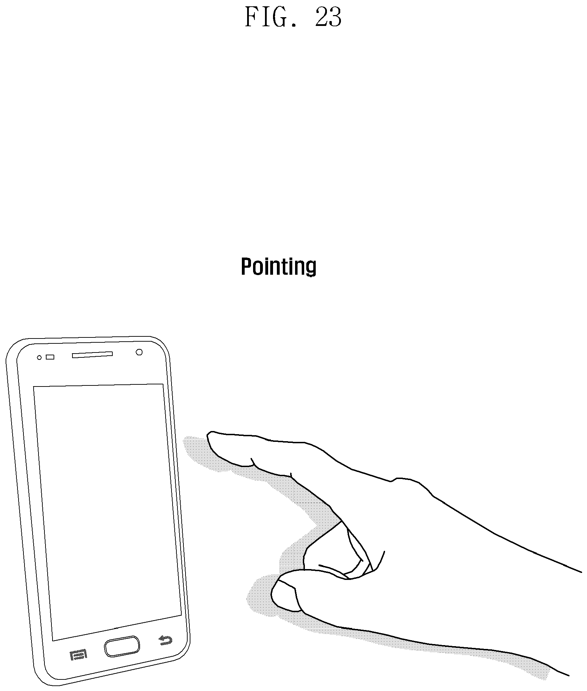

Referring to FIG. 23, the spatial gesture may be a pointing gesture. For example, the pointing gesture may correspond to a user holding a hand having an input means (e.g., an outstretched finger, thumb, or the like) over substantially a same position relative to the screen for at least a predefined period of time. The pointing gesture may include the hand (e.g., the outstretched finger) being held in substantially a constant same position relative to the screen which is disposed away from the screen such that no contact is made between the outstretched finger and the screen surface. According to exemplary embodiments of the present invention, the terminal may detect the pointing gesture by determining that the hand is in a predetermined configuration (e.g., the hand forms a pointing gesture in which at least one finger is outstretched), and determining that the pointing gesture is held in substantially a constant position away from the screen for at least a predefined period of time. For example, the terminal may compare coordinates of a detected pointing gesture over a predefined period of time and determine that a lack of change in the coordinates of the detected pointing gesture corresponds to a pointing gesture. As another example, the terminal may compare the configuration of the hand over a predefined period of time and determine that maintaining the configuration of the hand in the pointing gesture configuration over the predefined of time corresponds to the pointing gesture.

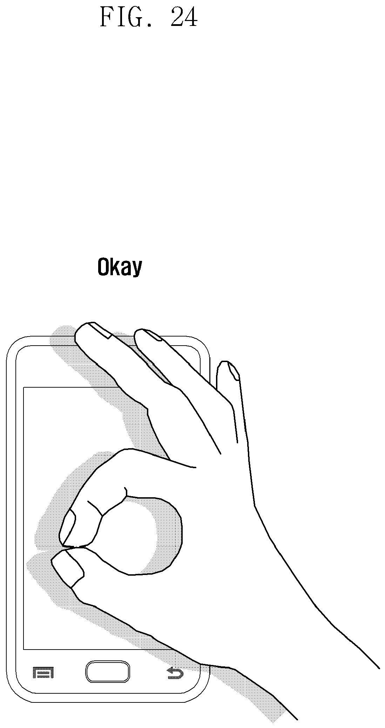

Referring to FIG. 24, the spatial gesture may be an okay gesture. For example, the okay gesture may correspond to a user holding a hand having an index finger and thumb forming a circle and having the remaining fingers outstretched over substantially a same position relative to the screen for at least a predefined period of time. The okay gesture may include the hand (e.g., the hand having an index finger and thumb forming a circle and having the remaining fingers outstretched) being held in substantially a constant same position relative to the screen which is disposed away from the screen such that no contact is made between the hand and the screen surface. According to exemplary embodiments of the present invention, the terminal may detect the okay gesture by determining that the hand is in a predetermined configuration (e.g., the hand having an index finger and thumb forming a circle and having the remaining fingers outstretched), and determining that the okay gesture is held in substantially a constant position away from the screen for at least a predefined period of time. For example, the terminal may compare coordinates of a detected okay gesture over a predefined period of time and determine that a lack of change in the coordinates of the detected okay gesture corresponds to the okay gesture. As another example, the terminal may compare the configuration of the hand over a predefined period of time and determine that maintaining the configuration of the hand in the okay gesture configuration over the predefined of time corresponds to the okay gesture.

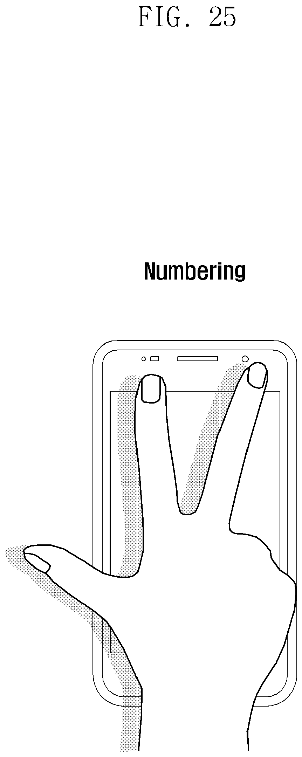

Referring to FIG. 25, the spatial gesture may be a numbering gesture. For example, the numbering gesture may correspond to a user holding a hand having a predefined number of fingers outstretched over substantially a same position relative to the screen for at least a predefined period of time. The numbering gesture may include the hand (e.g., the thumb and two fingers being outstretched) being held in substantially a constant same position relative to the screen which is disposed away from the screen such that no contact is made between the hand and the screen surface. According to exemplary embodiments of the present invention, the terminal may detect the numbering gesture by determining that the hand is in a predetermined configuration (e.g., the thumb and two fingers being outstretched), and determining that the numbering gesture is held in substantially a constant position away from the screen for at least a predefined period of time. For example, the terminal may compare coordinates of a detected numbering gesture over a predefined period of time and determine that a lack of change in the coordinates of the detected numbering gesture corresponds to the numbering gesture. As another example, the terminal may compare the configuration of the hand over a predefined period of time and determine that maintaining the configuration of the hand in the numbering gesture configuration over the predefined of time corresponds to the numbering gesture. According to exemplary embodiments of the present invention, the numbering gesture may include a plurality of gestures each of which corresponds to a different combination of fingers and thumb being outstretched.

Referring back to FIG. 1, after performing step S120, the terminal determines a certain action corresponding to the analysis result at step S130.

According to exemplary embodiments of the present invention, the terminal is capable of determining the action corresponding to the analyzed spatial gesture. For example, the terminal is capable of determining the operation mode of the terminal. The operation mode of the terminal may be determined according to the detected spatial gesture.

According to exemplary embodiments of the present invention, the operation mode of the terminal may include any of camera shooting mode, multimedia playback mode, text messaging mode, voice call mode, e-book-reading mode, navigation mode, calendar display mode, email messaging mode, video game play mode, and the like.

According to exemplary embodiments of the present invention, the terminal is also capable of determining a certain action corresponding to the spatial gesture in association with the operation mode.

According to exemplary embodiments of the present invention, if the terminal is in the multimedia playback mode, and if the detected spatial gesture corresponds to the sweeping gesture in a certain direction, the terminal is capable of regarding this gesture as a command for playback of the next song in the corresponding direction on a playlist.

According to exemplary embodiments of the present invention, if the terminal is in the e-book-reading mode, and if the detected spatial gesture corresponds to the sweeping gesture in a certain direction, the terminal is capable of regarding this gesture as a command for displaying the next page of the e-book in the corresponding direction.

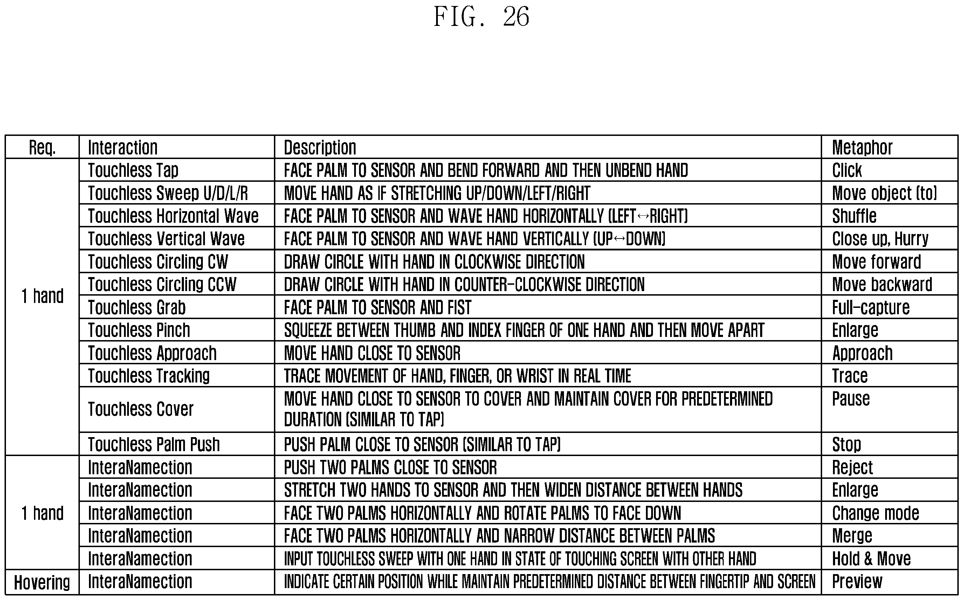

In order to determine the action corresponding to the spatial gesture, a set of spatial interactions as shown in FIG. 26 can be used.

FIG. 26 is a diagram illustrating an exemplary spatial interaction set for use in a spatial interaction-based terminal control method according to an exemplary embodiment of the present invention.

Referring to FIG. 26, the terminal is capable of defining the titles of the spatial gestures, describing detailed actions corresponding to the spatial gestures, and storing metaphors of the corresponding spatial gestures. The metaphors indicate actions corresponding to the spatial actions. For example, the terminal is capable of analyzing the detected spatial gesture and retrieving the action mapped to the spatial gesture from the interaction set based on the analysis result. The defined spatial gestures and associated action mapped to the defined spatial gestures may be stored as a Look-Up Table (LUT).

Thereafter, the terminal performs the action at step S140. For example, based on detection and determination of a spatial gesture, the terminal may determine an operation or action corresponding to the spatial gesture and perform the operation or action corresponding to the spatial gesture.

According to exemplary embodiments of the present invention, the terminal is capable of performing the determined action.

The spatial gesture-based terminal control methods according to exemplary embodiments of the present invention are described hereinafter with reference to the accompanying drawings in detail.

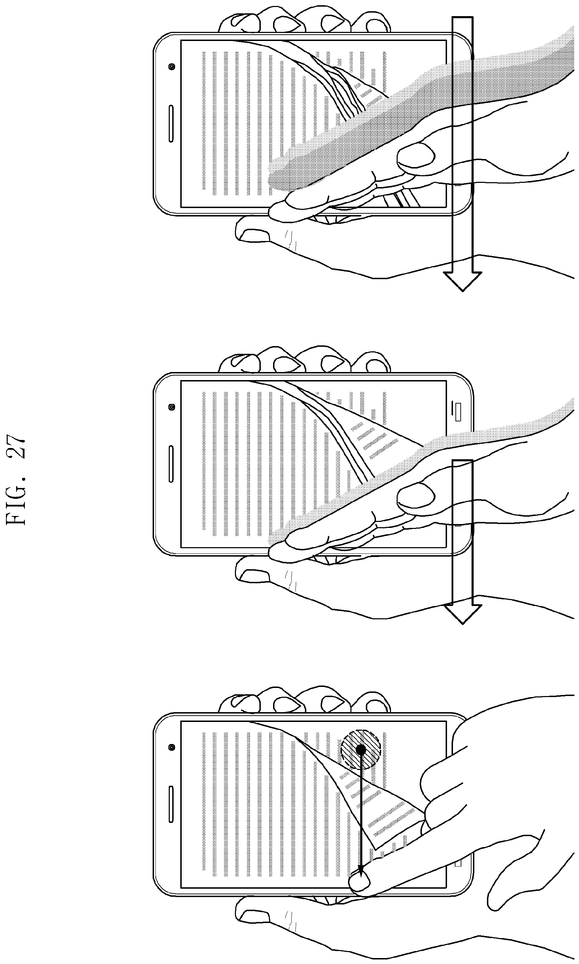

FIG. 27 is a diagram illustrating exemplary screen displays presented in association with a spatial interaction-based terminal control method according to an exemplary embodiment of the present invention.

Referring to FIG. 27, the terminal detects an input image taken by the camera and analyzes the image. The terminal is capable of analyzing at least one of direction, speed, and movement distance of an input means based on the input image. For example, the terminal is capable of detecting the movement of the user's hand to the left/right direction.

The terminal is capable of performing an action corresponding to the analysis result. For example, the terminal is capable of scrolling items on the screen of the display unit in the left/right direction.

The terminal is capable of scrolling the items at a speed in synchronization with the movement speed of the input means. The terminal is also capable of turning one or more pages (or a chapter) of an e-book in synchronization with the movement speed and distance of the input means. The terminal is also capable of turning the photos of an album application or playing a next song listed next to the currently playing song in a playlist depending in accordance with the spatial gesture.

As an example, FIG. 27 illustrates the turning of the page of a document or e-book based on the detection of a touchless tracking from one side of the screen to an opposing side of the screen, the detection of a touchless sweep from one side of the screen to the opposing side of the screen having a slow speed, and the detection of a touchless sweep from one side of the screen to the opposing side of the screen having a fast speed. According to the detected gesture, the terminal may turn a single page, a few pages, or several (e.g., a lot) of pages. For example, the number of pages turned may correspond to how pronounced the gesture appears to the terminal.

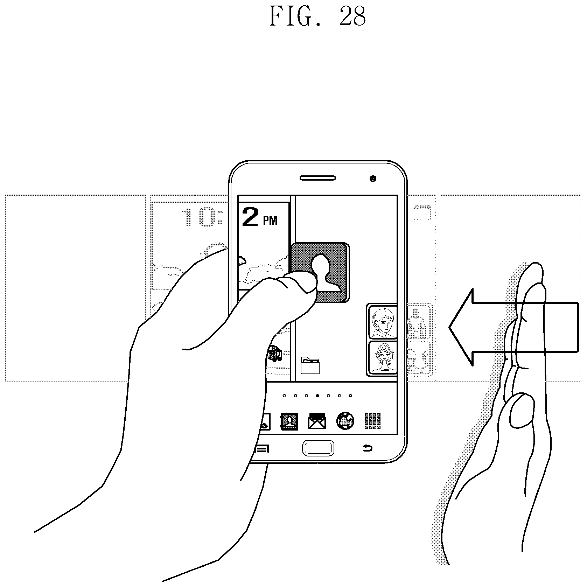

FIG. 28 is a diagram illustrating an exemplary situation of making a spatial gesture available in a spatial interaction-based terminal control method according to an exemplary embodiment of the present invention.

Referring to FIG. 28, the terminal is capable of detecting a touch gesture and a spatial gesture simultaneously or sequentially. The terminal is also capable of detecting a spatial gesture in the state of tracing the touch gesture. For example, the terminal is capable of detecting the spatial gesture made in a certain direction in the state that a touch gesture made at a certain position is maintained.

In this case, the terminal is capable of selecting an item at the position at which the touch gesture is made (e.g., detected) on the screen and moving the corresponding selected item in the left/right direction on the screen in synchronization with the movement direction of the spatial gesture. For example, the selected item may be an icon, a widget, an image arranged on the background, or the like.

The terminal is also capable of scrolling the items in the left/right direction, with the exception of the selected item, in synchronization with the movement direction of the spatial gesture. The items can be any of all the types of User Interface (UI) items displayed on the background screen such as icon and widget.

According to exemplary embodiments of the present invention, the selected item corresponding to the touch gesture may remain in a static display position and other items displayed on the screen may be moved or changed according to the detected spatial gesture (e.g., a touchless sweep).

The terminal is also capable of placing a call or sending a text message or a file to a recipient selected by a touch gesture according to the spatial gesture.

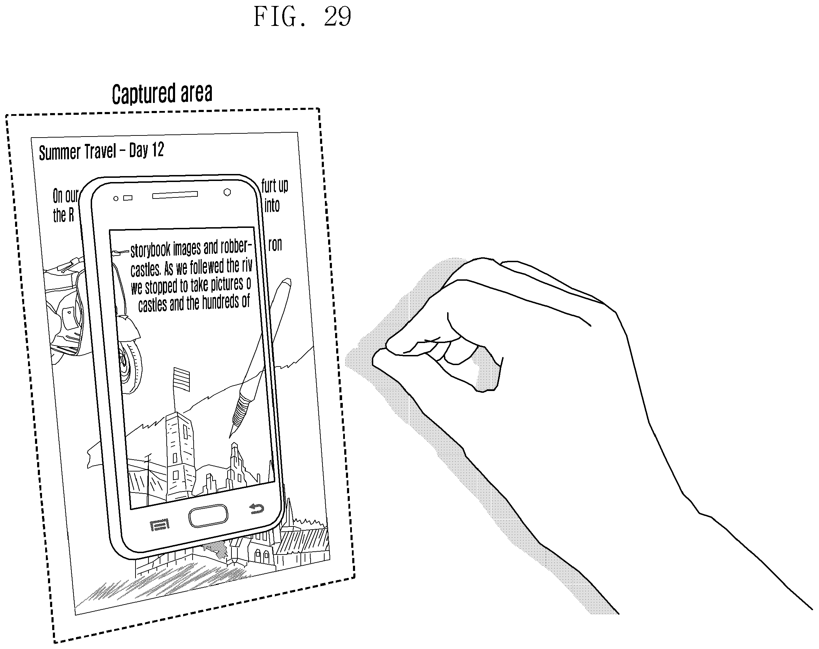

FIG. 29 is a diagram illustrating an exemplary situation of making a spatial gesture available in a spatial interaction-based terminal control method according to an exemplary embodiment of the present invention.

Referring to FIG. 29, the terminal is capable of detecting an input image taken by the camera and analyzing the input image. The terminal is capable of analyzing the input image to detect the spatial gesture corresponding to the fist.

The terminal is capable of performing an action corresponding to the analysis result. For example, upon detection of the spatial gesture corresponding to the fist, the terminal may perform a corresponding predefined action.

For example, the terminal is capable of capturing and storing the content displayed on the screen or the entire content including a part not displayed on the screen. The terminal is also capable of storing the captured content in the form of an image.

In the case of storing the captured content as an image, the terminal is capable of processing the image to a format having predetermined size, resolution, and aspect ratio in synchronization of movement speed, finger unfolding level before fisting, finger folding level after fisting, and the like.

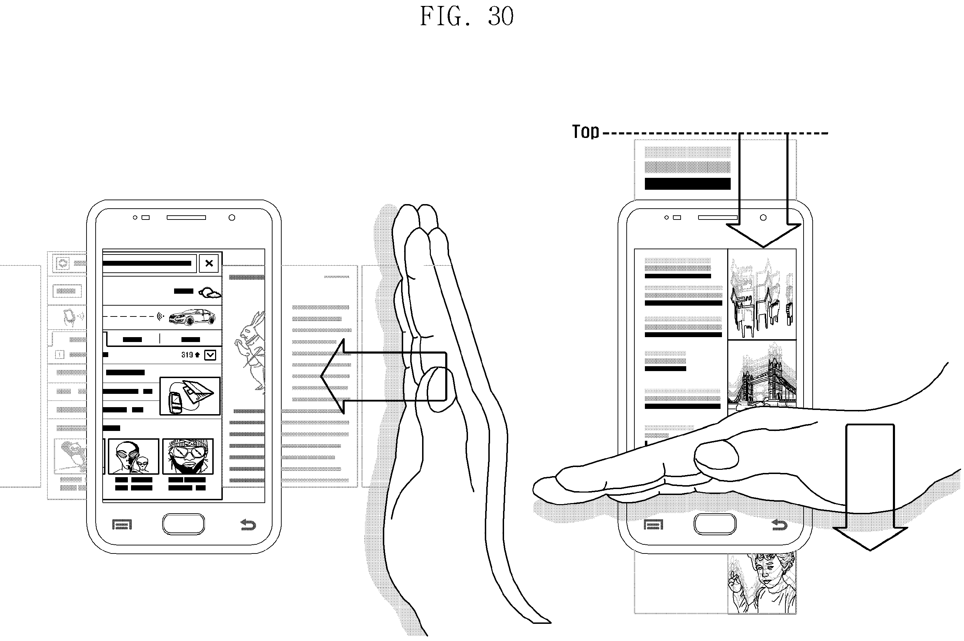

FIG. 30 is a diagram illustrating an exemplary situation of making a spatial gesture available in a spatial interaction-based terminal control method according to an exemplary embodiment of the present invention.

Referring to FIG. 30, the terminal is capable of detecting an input image taken by the camera and analyzing the input image. The terminal is capable of analyzing the input image to detect the spatial gesture oriented to a certain direction.

The terminal is capable of performing an action navigating web browsers according to the spatial gesture. In the case that multiple web browsers are arranged in the form of tabs, the terminal is capable of performing an action of navigating the tabs. In the case that multiple applications are running, the terminal is capable of performing an action navigating the applications.

The terminal is also capable of displaying a screen on which the web browser is moved to the left/right/up/down side or the top/bottom side. The terminal is also capable of performing an action of refreshing, expanding/contracting, copying, navigating, printing, turning to previous/next page onto the web browser displayed on the screen, and the like.

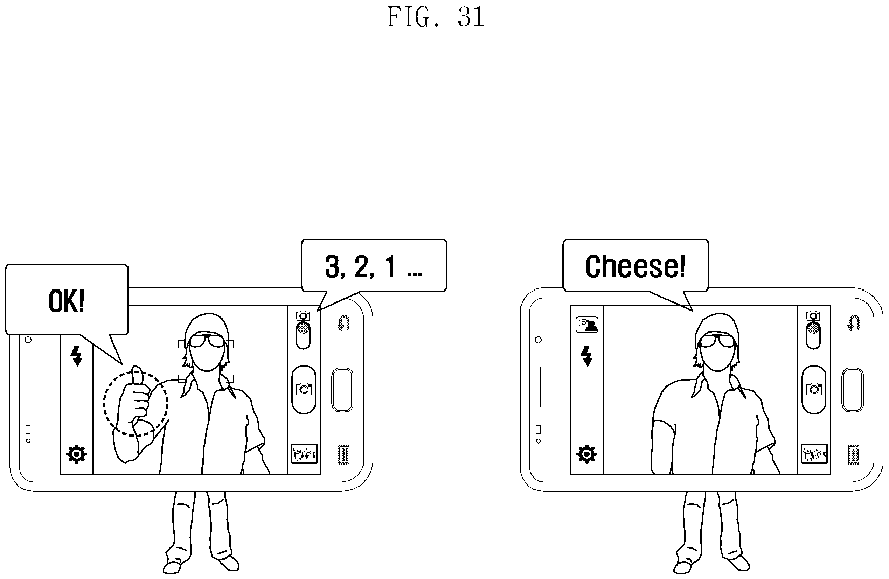

FIG. 31 is a diagram illustrating an exemplary situation of making a spatial gesture available in a spatial interaction-based terminal control method according to an exemplary embodiment of the present invention.

Referring to FIG. 31, the terminal is capable of detecting an input image taken by the camera and analyzing the shape of the input means. For example, the terminal is capable of determining the shape of the hand. The terminal is capable of determining the number of unfolded fingers, shape of the fingers, palm and back of the hand, positions and sizes of the fingers.

The terminal is capable of performing an action according to the shape of the input means.

According to exemplary embodiments of the present invention, the terminal is capable of determining the shooting time of the camera based on the number of unfolded fingers. For example, the terminal is capable of controlling a camera function such that the camera captures an image after or during the time corresponding to the number of unfolded fingers. The terminal is also capable of controlling the camera function such that the camera to capture image immediately according to the shape of the hand.

According to exemplary embodiments of the present invention, the terminal is also capable of controlling the camera to autofocus according to the shape of the hand. For example, the camera may be configured to perform autofocusing when the thumb up gesture is detected.

The terminal is also capable of applying a certain visual effect according to the detected spatial gesture.

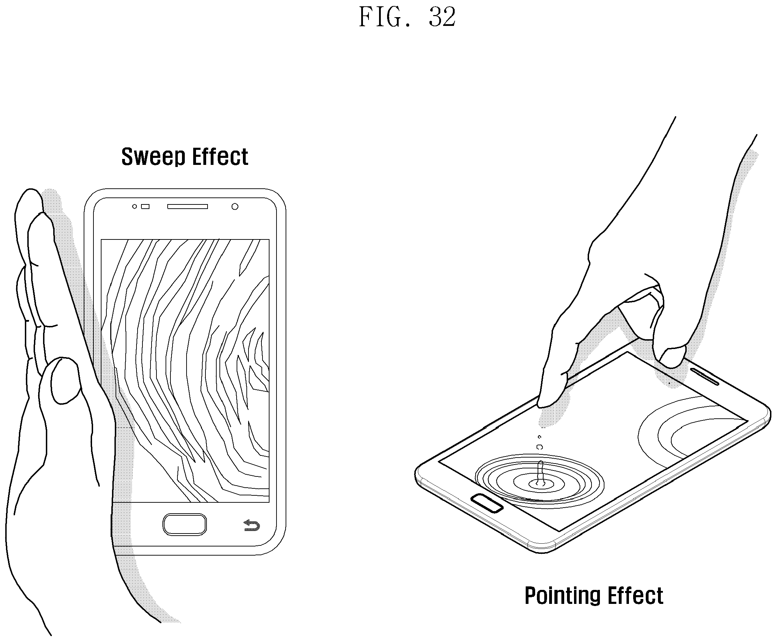

FIG. 32 is a diagram illustrating an exemplary situation of making a spatial gesture available in a spatial interaction-based terminal control method according to an exemplary embodiment of the present invention.

Referring to FIG. 32, the terminal is capable of detecting the movement in a certain direction or the gesture of the input means of approaching the terminal. For example, the terminal is capable of detecting a finger approaching

The terminal is capable of analyzing the movement direction and speed, coordinates of the approaching finger, and distance.

The terminal is capable of performing an action corresponding to the analysis.

According to exemplary embodiments of the present invention, the terminal is capable of displaying a water surface moving according to a certain movement direction and speed of the input means. The terminal may also display a screen showing a water drop falling at a certain position. The terminal is capable of displaying screen images giving various emotional effects. The terminal is capable of displaying a 2-Dimensional (2D) or 3-Dimensional (3D) screen images with the output of vibration and sound effect in synchronization with the change of the screen image.

For example, upon detection of a touchless sweep, the terminal may display a screen showing a wave, a ripple, or a series of waves travel across the screen. As another example, upon detection of a pointing effect or a touchless hover, the terminal may display a screen showing a ripple effect associated with an object or droplet of water being dropped into a liquid.

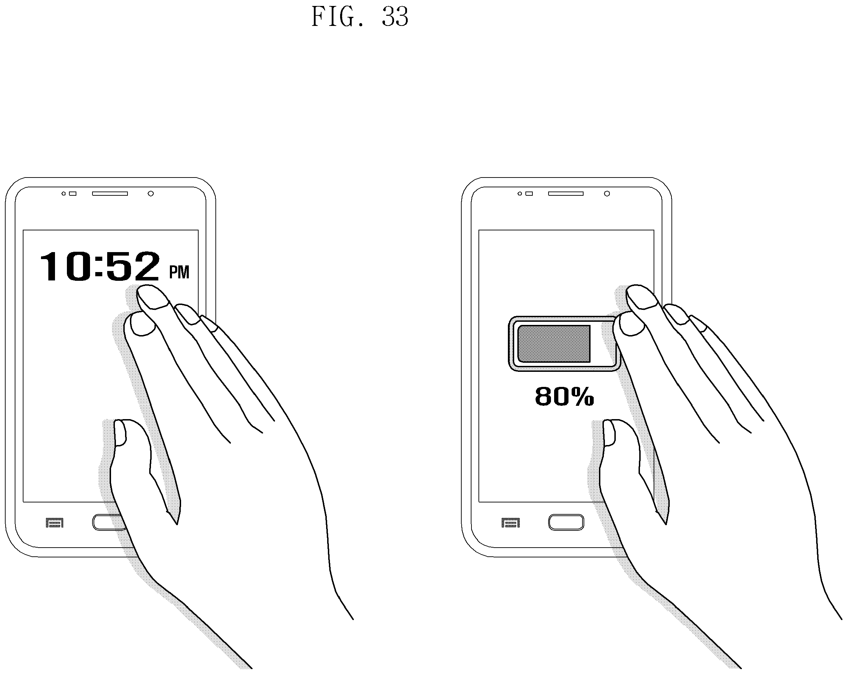

FIG. 33 is a diagram illustrating an exemplary situation of making a spatial gesture available in a spatial interaction-based terminal control method according to an exemplary embodiment of the present invention.

Referring to FIG. 33, the terminal is capable of detecting a movement of an object approaching the terminal or the gesture of an input means close to the terminal and analyzing the movement or gesture, and performing an action corresponding to the analysis.

The terminal is capable of displaying simple information in association with the operation mode. For example, the terminal is capable of displaying weather information, a time, a battery charge state, and an alarm window in a screen lock mode,a power saving mode, or the like.

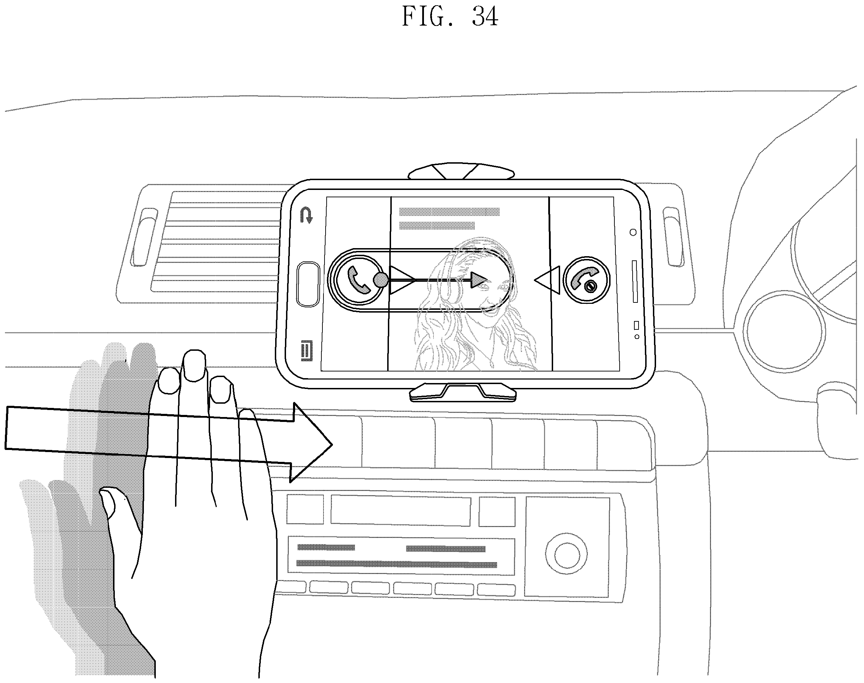

FIG. 34 is a diagram illustrating an exemplary situation of making a spatial gesture available in a spatial interaction-based terminal control method according to an exemplary embodiment of the present invention.

Referring to FIG. 34, the terminal is capable of detecting a movement and analyzing the direction of the movement. The terminal is also capable of performing an action in association with the operation mode.

According to exemplary embodiments of the present invention, the terminal is capable of determining whether the terminal is in a driving mode based on data acquired from velocity/acceleration sensor, gyro sensor, and the like. If a movement or spatial gesture is detected when the terminal is in a driving mode, a direction of the movement or spatial gesture is detected and a corresponding action such as, for example, receiving an inbound call, rejecting the call, rejecting the call with the transmission of the notification message informing that the user is at the wheel, and the like may be performed. For example, spatial gestures may be used as a hands-free means for controlling the terminal when the terminal is determined to be in a driving mode.

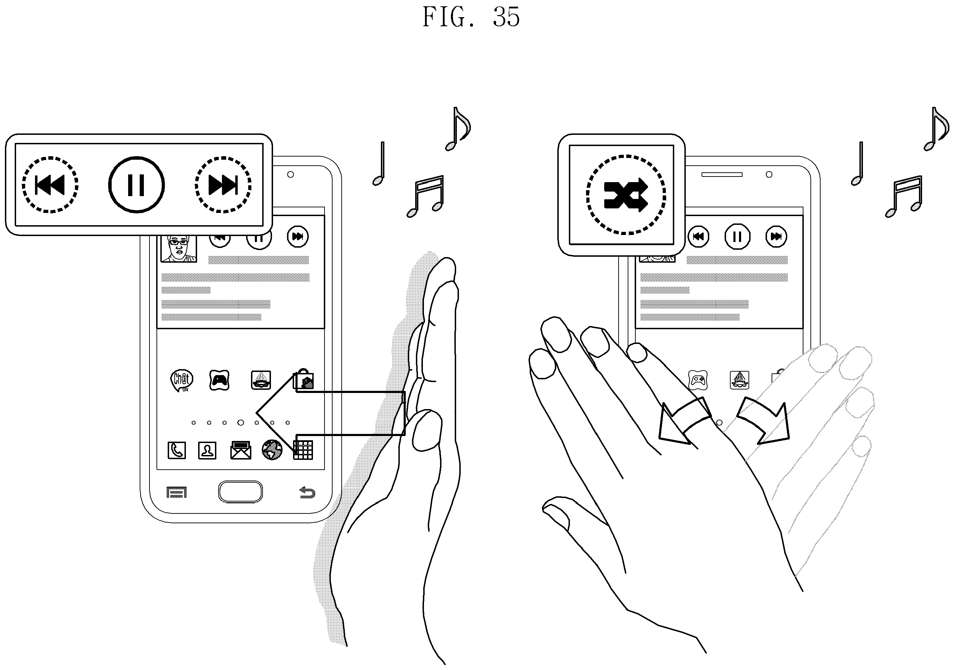

FIG. 35 is a diagram illustrating an exemplary situation of making a spatial gesture available in spatial interaction-based terminal control method according to an exemplary embodiment of the present invention.

Referring to FIG. 35, the terminal is capable of controlling multimedia playback based on the spatial gesture.

For example, the terminal is capable of detecting the image input through the camera and navigating forward/backward the multimedia file list, playing/pausing, shuffling multimedia files in accordance to the movement and/or shape of the input means, and the like.

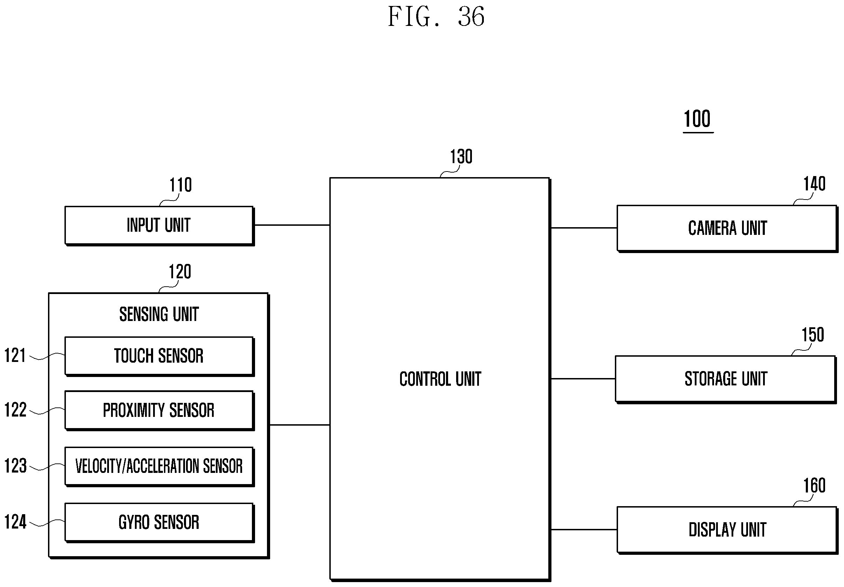

FIG. 36 is a block diagram illustrating a configuration of a terminal according to an exemplary embodiment of the present invention.

Referring to FIG. 36, the terminal 100 includes an input unit 110, a sensing unit 120, a control unit 130, a camera unit 140, a storage unit 150, and a display unit 160.

The input unit 110 generates an input signal in response to a user's manipulation for controlling the terminal 100. The input unit 110 can be implemented with at least one of a keypad, a dome switch, a touch pad (resistive/capacitive), jog wheel, jog switch, and the like.

The sensing unit 120 includes at least one of a touch sensor 121, a proximity sensor 122, a velocity/acceleration sensor 123, a gyro sensor 124, and the like.

The touch sensor 121 is capable of detecting a touch input. The touch sensor 121 may be implemented using at least one of a touch film, a touch sheet, a touch pad, and the like.

According to exemplary embodiments of the present invention, the touch sensor 121 may be integrated with the display unit 160 as a touchscreen. The touch sensor 121 can be configured to convert the pressure,change in capacitance, and the like at a certain position of the display unit to an electrical input signal. The touch sensor 121 may be capable of detecting the touch position and size and touch pressure.

If a touch input is detected, the touch sensor 121 generates a corresponding touch signal and transmits the touch signal to the control unit 130. The control unit 130 is capable of determining the position at which the touch input is made based on the touch signal.

According to exemplary embodiments of the present invention, the display unit 160 may be implemented as a touchscreen.

The proximity sensor 122 may be arranged inside of the terminal 100 around the display unit 160. The proximity sensor 122 may be capable of detecting an object approaching a predetermined detection surface or the existence of an object around the terminal 100 by means of the electric field or infrared ray without physical contact.

The proximity sensor 122 may be implemented with at least one of a transparent photoelectric sensor, a direct reflective photoelectric sensor, a mirror reflective optical sensor, a microwave oscillation proximity sensor, a capacitive proximity sensor, a magnetic proximity sensor, an infrared proximity sensor, and the like. If the display unit 160 is implemented in the form of a capacitive touchscreen, the proximity sensor 122 may be configured to detect the approach of a pointer based on the change of the electric field.

The proximity sensor 122 may be capable of detecting a proximity touch and proximity touch pattern (e.g., proximity touch distance, proximity touch direction, proximity touch speed, proximity touch time, proximity touch position, proximity touch movement state, and the like). The information associated with the detected proximity touch gesture and the proximity touch pattern may be displayed on the screen of the display unit 160.

The velocity/acceleration sensor 123 may be capable of detecting the motion of the terminal 100. The velocity/acceleration sensor 123 may be capable of including a device for converting change of acceleration in a certain direction to an electrical signal.

According to exemplary embodiments of the present invention, the control unit 130 is capable of determining whether the terminal is in a driving mode based on the terminal's motion detected by the velocity/acceleration sensor 123.

The gyro sensor 124 may be capable of detecting the orientation of the terminal. The gyro sensor 124 may measure the angular velocity of the terminal 100 to detect the rotation angle to the reference orientation. For example, the gyro sensor 124 may be capable of detecting or determining ratio angles to three orientation axes(e.g., azimuth, pitch, and roll).

According to exemplary embodiments of the present invention, the control unit 130 may be capable of determining whether the terminal 100 rests on a flat surface or is mounted on a docking station based on the detected orientation.

The control unit 130 controls the operations of the components of the terminal 100. For example, the control unit 130 is capable of detecting a spatial gesture to the terminal 100, analyzing the spatial gesture, determining an action mapped to the spatial gesture, and performing the determined action.

The detailed operations of the control unit 130 are as described above.

The camera unit 140 may process the video frame such as still and motion picture acquired by the image sensor in the video call mode, a still picture capturing mode, or motion picture capturing mode. The processed video frame can be displayed by the display unit 160.

The camera unit 140 is capable of transferring the processed video frame to the storage unit 150 and the control unit 130. The control unit 130 analyzes the image from the camera unit 140 to detect a shape, form, and the like on the image.

The storage unit 150 may be capable of storing programs associated with the operation of the control unit 130 and input/output data (e.g., phonebook, messages, still and motion images, and the like) temporarily or semi-permanently. The storage unit 150 may also be capable of storing the data associated with various vibration pattern and sound effects output in detection of the touch gesture on the touchscreen.

The storage unit 150 may also be capable of storing a set of spatial interactions mapping the spatial gestures and corresponding action to be performed interactively.

The storage unit 150 can be implemented with at least one of flash memory, hard disk, micro multimedia card (e.g. SD and xD memory cards), Random Access Memory (RAM), Static RAM (SRAM), Read-Only Memory (ROM), Electrically Erasable Programmable Read-Only Memory (EEPROM), Programmable Read-Only Memory (PROM), magnetic memory, magnetic disc, optical disc, and the like.

The display unit 160 may be capable of displaying (outputting) the information processed by the terminal 100 in the form of a UI or Graphical UI (GUI).

The display unit 160 can be implemented with one of a Liquid Crystal Display (LCD), a Thin Film Transistor LCD (TFT LCD), an Organic Light Emitting Diode (OLED), a flexible display, and a 3-Dimensional (3D) display.

The display unit 160 can be implemented as a touchscreen with interlayered touch sensor 121 and/or proximity sensor 123. In this case, the display unit 160 may be capable of operating as an input device as well as the output device.

As described above, the terminal and spatial interaction-based terminal control method according to exemplary embodiments of the present invention are capable of controlling the terminal intuitively and conveniently with spatial gesture of the user.

In addition, the terminal and spatial interaction-based terminal control method according to exemplary embodiments of the present invention are advantageous in controlling the terminal efficiently without direct touch to the terminal even. For example, the terminal and method for controlling such a terminal according to exemplary embodiments of the present invention may be beneficial when a user is operating the terminal with a glove worn on the user's hand or when the terminal is stained with foreign materials.

It will be appreciated that exemplary embodiments of the present invention according to the claims and description in the specification can be realized in the form of hardware, software or a combination of hardware and software.

Any such software may be stored in a non-transitory computer readable storage medium. The computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are exemplary embodiments of machine-readable storage that are suitable for storing a program or programs comprising instructions that, when executed, implement exemplary embodiments of the present invention. Accordingly, exemplary embodiments provide a program comprising code for implementing apparatus or a method as claimed in any one of the claims of this specification and a non-transitory machine-readable storage storing such a program.

While the invention has been shown and described with reference to certain exemplary embodiments thereof, it will be understood by those skilled in the art the various changes in form and details may be made therein without from the spirit and scope of the invention as defined by the appended claims and their equivalents.

Embodiments according to the present disclosure are provided in the following clauses.
Clause 1. A method for controlling a terminal, the method comprising:
   detecting a user gesture moving an object in a certain direction within proximity of the terminal;
   determining at least one of movement direction, movement speed, and movement distance of the user gesture; and
   performing a control operation associated with a currently running application according to the determined at least one of the movement direction, movement speed, and movement distance of the user gesture.
Clause 2. The method of clause 1, wherein the user gesture comprises:
   approaching of the object into a predetermined range around the terminal; and
   moving the object in a certain direction within the predetermined range.
Clause 3. The method of clause 1, wherein the user gesture is one of a unidirectional horizontal movement, a unidirectional vertical movement, a unidirectional sweep, a reciprocal movement, a bidirectional movement, and a wave movement.
Clause 4. The method of clause 1, wherein the performing of the control operation comprises turning at least one page of an electronic book in the movement direction.
Clause 5. The method of clause 4, wherein the turning of the at least one page of the electronic book comprises turning one or more pages or a chapter of the electronic book based on at least one of the movement speed and movement distance of the user gesture.
Clause 6. The method of clause 1, wherein the performing of the control operation comprises controlling a playback of a media file based on the user gesture.
Clause 7. The method of clause 6, wherein the controlling of the playback of the media file comprises at least one of playing a media file proceeding or following current media file, adjusting volume up or down, starting or ending playback, and shuffling files.
Clause 8. The method of clause 1, wherein the performing of the control operation comprises controlling at least one of moving a content of an application in an up, down, left, or right direction, expanding or shrinking the content of the application, copying the content of the application, printing the content of the application, and searching for the content of the application on a screen, in accordance with at least one of the movement direction, movement speed, and movement distance.
Clause 9. The method of clause 10, wherein the content includes at least one of a webpage, a list, an image, and an electronic book.
Clause 10. The method of clause 1, wherein the performing of the control operation comprises controlling an application of an effect corresponding to the user gesture on a screen of a display unit.
Clause 11. The method of clause 10, wherein the controlling of the application of the effect comprises applying at least one of a wave effect, a water drop effect, a wind effect, a color change effect, and a screen switching effect.
Clause 12. The method of clause 10, wherein the screen can be one of an idle screen, a lock screen, and a user interface screen.
Clause 13. The method of clause 1, wherein the performing of the control operation comprises navigating tabs of a web browser running on a background according to the user gesture.
Clause 14. The method of clause 1, wherein the performing of the control operation comprises switching among at least one of tabs of webpages and currently running applications.
Clause 15. The method of clause 14, wherein the switching among at least one of the tabs of the webpages and the currently running applications comprises:
   determining a tab or background running application corresponding to the movement direction on a list of the webpages or the currently running applications; and
   switching to the determined webpage or background running application to be displayed on the screen.
Clause 16. A terminal comprising:
   a sensing unit which detects a user gesture moving an object in a certain direction within proximity of the terminal;
   a control unit which determines at least one of movement direction, movement speed, and movement distance of the user gesture and performs a control operation associated with a currently running application according to the determined at least one of movement direction, movement speed, and movement distance of the user gesture; and
   a display unit which displays an execution screen of the application under the control of the control unit.
Clause 17. The terminal of clause 16, wherein the user gesture comprises:
   approaching of the object into a predetermined range around the terminal; and
   moving the object in a certain direction within the predetermined range.
Clause 18. The terminal of clause 16, wherein the control unit controls at least one of page-turning, media playback, content movement, web browser tab switching, application switching, and visual effect application on screen.
Clause 19. The terminal of clause 16, wherein the sensing unit detects the user gesture using at least one of a proximity sensor, an infrared sensor, and a camera sensor; and
   wherein the sensing unit generates an input signal corresponding to the user gesture to the control unit.
Clause 20. The terminal of clause 16, wherein the user gesture corresponds to one of a unidirectional horizontal movement, a unidirectional vertical movement, a unidirectional sweep, a reciprocal movement, a bidirectional movement, a wave movement, and a hovering event.
Clause 21. A non-transient computer-readable storage medium storing instructions that when executed cause at least one processor to perform the method of clause 1.

## Claims

1. A method for controlling an electronic device, the method comprising:
acquiring an input image using a camera;
analyzing a user gesture in the input image, by:
identifying a user's hand disposed in a predefined configuration, and
determining a shape of the hand is changed to a predetermined shape by a movement of the at least part of the hand, and
executing a camera function corresponding to the user gesture.

2. The method of claim 1, wherein the executing the camera function comprises:
activating a timer to capture an image using the camera based on the user gesture; and
in response to the timer expiring, capturing the image using the camera.

3. The method of claim 2, wherein activating the timer comprises setting the timer for a predetermined time.

4. The method of claim 1, wherein determining whether the shape of the hand is changed to the predetermined shape comprises:
determining coordinates of the at least part of the hand corresponds to the predetermined shape.

5. The method of claim 1, further comprising, in response to the hand being disposed in the predefined configuration, extracting the area including the hand.

6. The method of claim 5, further comprising, in response to at least one finger of the hand being substantially outstretched relative to a palm of the hand, determining that the hand is disposed in the predefined configuration.

7. The method of claim 1, wherein determining whether the shape of the hand is changed to the predetermined shape comprises detecting a movement of at least one finger of the hand.

8. The method of claim 7, wherein determining whether the shape of the hand is changed to the predetermined shape comprises tracking a coordinate of at least one point of the at least one finger.

9. The method of claim 1, wherein determining whether the shape of the hand is changed to the predetermined shape comprises determining whether the shape of the hand is changed to a clenched fist.

10. An electronic device comprising:
a camera; and
at least one processor configured to:
acquire an input image using the camera,
analyze a user gesture in the input image, by:
identifying a user's hand disposed in a predefined configuration, and
determining a shape of the hand is changed to a predetermined shape by a movement of the at least part of the hand, and
executing a camera function corresponding to the user gesture.

11. The electronic device of claim 10, wherein the at least one processor is configured to:
activate a timer to capture an image using the camera based on the user gesture; and
in response to the timer expiring, capture the image using the camera.

12. The electronic device of claim 10, wherein the at least one processor is configured to determine coordinates of the at least part of the hand corresponds to the predetermined shape.

13. The electronic device of claim 10, wherein the at least one processor is further configured to, in response to the hand being disposed in the predefined configuration, extract the area including the hand.

14. The electronic device of claim 10, wherein the at least one processor is further configured to detect a movement of at least one finger of the hand.

15. The electronic device of claim 10, wherein the at least one processor is further configured to track a coordinate of at least one point of the at least one finger.
